**Europäisches Patentamt**

**European Patent Office**

**Office européen des brevets**

(19)

(11) Veröffentlichungsnummer : **0 445 195 B1**

(12) **EUROPÄISCHE PATENTSCHRIFT**

(45) Veröffentlichungstag der Patentschrift :
17.06.92 Patentblatt 92/25

(51) Int. Cl.$^5$ : **H04N 5/65**

(21) Anmeldenummer : **90900097.8**

(22) Anmeldetag : **21.11.89**

(86) Internationale Anmeldenummer :
**PCT/EP89/01415**

(87) Internationale Veröffentlichungsnummer :
**WO 90/06654 14.06.90 Gazette 90/14**

(54) **HALTE- UND BEFESTIGUNGSVORRICHTUNG ZUR FIXIERUNG VON BILDSCHIRMFILTERN.**

(30) Priorität : **28.11.88 DE 8814795 U**
**04.02.89 DE 8901259 U**

(43) Veröffentlichungstag der Anmeldung :
**11.09.91 Patentblatt 91/37**

(45) Bekanntmachung des Hinweises auf die
Patenterteilung :
**17.06.92 Patentblatt 92/25**

(84) Benannte Vertragsstaaten :
**AT CH DE GB LI**

(56) Entgegenhaltungen :
**DE-A- 1 236 820**
**FR-A- 1 255 173**
**US-A- 2 496 752**
**US-A- 3 215 776**
**US-A- 4 000 367**

(73) Patentinhaber : **Gardex AG**
**Speicherstr. 48**
**CH-9000 St. Gallen (CH)**

(72) Erfinder : **Eis, Manfred**
**Schlierbachweg 21**
**W-8218 Unterwössen (DE)**

(74) Vertreter : **Flach, Dieter Rolf Paul, Dipl.-Phys.**
**et al**
**Patentanwälte Andrae/Flach/Haug/Kneissl**
**Prinzregentenstrasse 24**
**W-8200 Rosenheim (DE)**

EP 0 445 195 B1

## Beschreibung

Die Erfindung betrifft ein Halte- und Befestigungsvorrichtung zur Fixierung von Bildschirmfiltern an Monitoren mit flacher oder gewölbter Frontmaske nach dem Oberbegriff des Anspruches 1.

Bildschirmfilter insbesondere für Monitore sind hinlänglich bekannt. Sie dienen der Kontrastverbesserung und der Verminderung des Spiegeleffektes, der beim Arbeiten mit Monitoren äußerst unangenehm und ermüdend sein kann. Schließlich dienen die Bildschirmfilter auch dem Schutz vor elektrostatischer Aufladung der Bildschirmoberfläche und damit letzlich dem Schutz der mit dem Monitor arbeitenden Bedienungsperson.

Entspiegelnde und kontrastverbessernde Bildschirmfilter sowie Bildschirmfilter aus feinstem Präzisionsgewebe jeweils mit oder ohne Rahmen können jedoch nicht ohne weiteres auf herkömmlichen Monitoren angebracht werden, da die allergrößte Zahl der zur Zeit verwandten Bildschirmgeräte eine nach vorne gewölbt ausgebildete Frontmaske aufweist, also mit einer Wölbund sowohl in der vertikalen als auch in der horizontalen Richtung.

Um dennoch flache Bildschirmfilter an gewölbten Frontmasken von Bildschirmgeräten befestigen zu können, verwenden manche Hersteller Winkelprofile aus Kunstoff. Der breite Schenkel dieses Winkelprofils liegt oben auf dem Monitorgehäuse auf, der nach unten weisende Schenkel trägt den Bildschirmfilter. Die Befestigung auf der Oberseite des Monitorgehäuses kann dann mit einem Klettband erfolgen.

Ebenso bekannt ist es, Klötze aus Kunstoff zu verwenden, die ebenfalls mit Klettbandstücken angebracht werden können und die die Distanz zwischen Bildschirmfiltern und gewölbter Frontmaske überbrücken sollen. Auch die Verwendung von längeren Klettbandstücken, die oben am Bildschirmfilter angebracht sind und dann oben auf dem Monitorgehäuse aufgeklebt werden, ist bekannt.

Da zur Zeit weltweit tausende verschiedener Monitore im Einsatz sind, können die wenigen und teuren maßgerechten Lösungen mit passenden Bildschirmfilterrahmen nicht den Markterfordernissen gerecht werden.

Möglichst allgemein verwendbare bekannt gewordene Befestigungseinrichtungen weisen zudem den Nachteil auf, daß auf Grund der fehlenden Anpassung zwischen der flachen Bildschirmfilterscheibe und der gewölbten Frontmaske des Monitors keine seitliche Abdeckung gewährleistet ist, so daß störendes Seitenlicht und Staub an die Sichtfläche der Bildschirmröhre gelangen können. Zudem können auch die bisher bekannt gewordenen Lösungen in optischer Hinsicht nicht befriedigen.

Aufgabe der vorliegenden Erfindung ist es von daher, die Nachteile nach dem Stand der Technik zu überwinden und eine im Sinne eines Adapters verwendbare Halte- und Befestigungsvorrichtung zu schaffen, mittels der flache Bildschirmfilter an unterschiedlichen Monitoren vor allem an unterschiedlich gewölbten, aber auch flach ausgebildeten Monitoren angebracht werden können.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Der Kern der Erfindung ist darin zu sehen, daß die Halte- und Befestigungsvorrichtung aus einem elastisch nachgiebigen Adapterprofil in Form einer Faltenbalgkonstruktion besteht, das zumindest abschnittsweise am oberen und unteren Bereich und/oder den gegenüberliegenden vertikalen Seitenbegrenzungen der Frontmaske oder beispielsweise U-förmig oder gar völlig um die Monitorbildscheibe umlaufend an der Frontmaske des Monitorgehäuses angebracht werden kann. Durch die Anpaßfähigkeit wird eine problemlose Handhabung gewährleistet.

Ein Fernseher mit einer vor der Fernsehröhre schwenkbar gehaltenen Filtereinrichtung und einer formanpassungsfähigen Faltenbalgkonstruktion ist grundsätzlich zwar aus der US-A-3 215 776 bekannt geworden. Gemäß Figur 4 dieser Veröffentlichung ist der Bildschirmfilter 14 über eine Schwenkachse 50 im Inneren des Gehäuses der dort gezeigten Monitorröhre schwenkbar gehalten, wobei allerdings die elastische oder formanpassungsfähige Faltenbalgkonstruktion lediglich zur Verhinderung eines seitlichen Lichtaustrittes dient, nicht aber zur Halterung des Bildschirmfilters 14 an der Vorderseite der Monitorröhre bzw. der Frontmaske eines Monitors. Auch hier kommt der Faltenbaldkonstruktion in bekannter Weise lediglich eine Verkleidungs- und Abschirmfunktion, nicht aber eine Tragfunktion zu.

Eine starre Fixierung kann beispielsweise noch durch ein die endgültige Halte- und Fixierlage des Faltenbalgs begrenzendes Fixierstück erreicht werden. Das Profilteil wird dabei mit einer Klettverschlußhälfte ausgestattet, um somit das Profilteil lösbar an der zweiten an den Monitor angebrachten Klettverschußhälfte anzubringen.

Das Profilteil kann ferner in einer bevorzugten Ausführungsform mit einer entsprechenden Einhängvorrichtung beispielsweise in Form einer Nut zum Ein- und Ausschieben der Bildschirmfilter-Scheibe ausgestattet sein. Aber auch hier ist beispielsweise eine feste Anbringung anderer herkömmlicher Bildschirmscheiben etwa durch eine Klebeverbindung oder auch durch eine Klettverbindung möglich.

Das anpassungsfähige Profilteil kann als einfach- oder mehrfachbalgförmiges Adapterstück ausgebildet sein.

In einer bevorzugten Ausführungsform kann an zumindest einer geeigneten Stelle vorzugsweise bei Verwendung einer Profilnut zur Aufnahme der Bildschirmfilter-Scheibe eine elektrische Kontaktklemme eingearbeitet sein, um hier die auf der Scheibe elektrisch leitende Schicht über ein nachfolgendes Kabel auf ein gewünschtes Potential zu legen, in der Regel zu erden.

Weitere Vorteile, Einzelheiten und Merkmale der Erfindung ergeben sich nachfolgend aus den anhand von Zeichnungen dargestellte Ausführungsbeispielen. Dabei zeigen im einzelnen:

Figur 1: eine schematische Seitendarstellung der an einem Monitor angebrachten Halte- und Befestigungsvorrichtung mit aufgesetztem Bildschirmfilter;

Figur 2a - 4a: drei verschiedene Varianten in schematischer Querschnittdarstellung mit balgförmigen Profilteilen;

Figur 2b - 4b: drei abgewandelte Ausführungsbeispiele zu den Figuren 2a bis 4a.

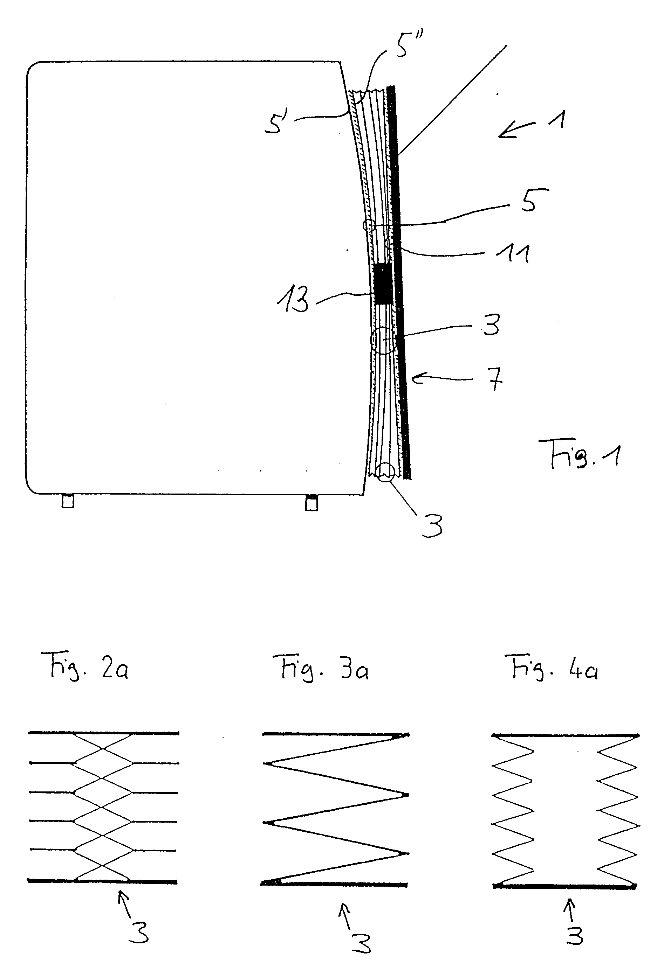

In den Zeichnungen ist ein Monitor 1 mit nach vorne weisender gewölbter Frontmaske gezeigt, wobei die Wölbung nicht nur in der in Figur 1 dargestellten Seitenansicht, sondern auch bei der nicht dargestellten Draufsicht ausgebildet sein kann.

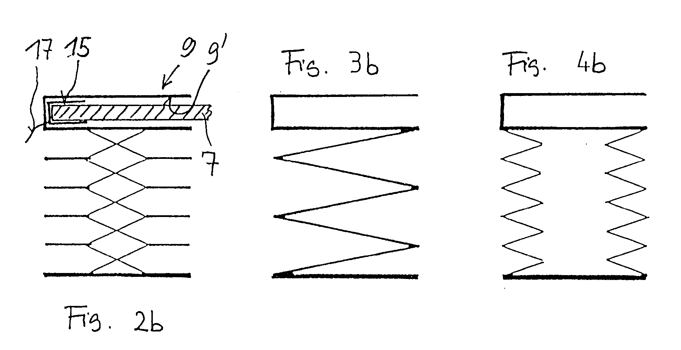

Im gezeigten Ausführungsbeispiel ist um die nicht sichtbare Bildschirmfläche umlaufend ein Adapterprofil 3 vorgesehen, das faltenbalgähnlich ausgebildet ist, wobei unterschiedliche wie in den Figuren 2 bis 4 beispielhaft in dem schematischen Seitenquerschnitt dargestellte Faltenbalgprofile möglich sind.

Das Adapterprofil 3 wird auf der um die nicht sichtbare Bildschirmfläche umlaufenden Frontseite des Monitors 1 über einen Klettverschluß 5 befestigt, wobei die eine Klettverschußhälfte 5′ beispielsweise über eine Klebeschicht, beispielsweise über eine zugehörige Haftschicht auf der Frontseite des Monitors aufgeklebt und die andere zweite Klettverschlußhälfte 5″ auf der der Monitorfrontseite zugewandten Seite des Adapterprofils 3 angebracht oder vorgesehen sein kann. Dadurch ergibt sich eine lösbare Befestigung.

Ein flache Bildschirmfilter-Scheibe 7 kann im gezeigten Ausführungsbeispiel an einer am Adapterprofil 3 ausgebildeten Einhängeinrichtung 9 angebracht werden, die im gezeigten Ausführungsbeispiel aus einer teilweise umlaufenden Nut 9′ besteht (Figur 2b).

Aber auch andere am Markt erhältliche Bildschirmfilter-Scheiben 7 können ohne eine derartige Einhängeinrichtung 9 beispielsweise durch einen weiteren Klettband-Verschluß 11 auf der äußeren Seite des Adapterprofil 3 angebracht werden.

Das erläuterte Adapterprofil 3 ist durch seine Flexibilität an die Frontmaske des Monitors anpaßfähig. Um einen möglichst sicheren Halt zu gewährleisten, kann schließlich ein Fixierstück 13 so angebracht werden, daß die maximale Öffnungsstellung des elastischen Adapterprofils 3 begrenzt wird. Im gezeigten Ausführungsbeispiel besteht das Fixierstück etwa aus einem Kunststoffring von 1 bis 3 cm Breite, welcher auf das balgförmige Adapterprofil seitlich so aufgeschoben wird, daß er mittig sitzt, also bei Anbringung des Adapters an der jeweiligen Seite des Bildschirmfilters dort ebenfalls mittig sitzt.

Mittels des Fixierstückes, das beispielweise als Ring oder Klammer ausgebildet sein kann, und den beiden Klettbandschichten, die das Adapterprofil an die entsprechende Wölbung der Frontmaske des Monitors fest anliegend und dicht halten, hat der fertig montierte Bildschirmfilter direkt festen Kontakt zum Bildschirm gehäuse.

Bei der Herstellung des gefalteten Kunststoffprofils ist die Elastizität desselben so zu wählen, daß die Haltekraft des Klettbandstreifens überwiegt, der den - entsprechend der Wölbund der Monitorfrontmaske auseinandergezogenen - außermittigen Bereich des Adapters festhält.

Natürlich können auch einzelne Adapterprofile zur Halterung verwandt und beispielsweise seitlich des Bildschirms oder nur oberhalb und unterhalb des Bildschirms angebracht werden. Auch eine U-förmige Ausbildung des Adapterprofils ist möglich.

Bevorzugt wird das Adapterprofils aus Kunstoff, beispielsweise im Extrusionsverfahren hergestellt. Es kann aber genauso auch aus Metall bestehen.

Wie anhand von Fig. 2b nur schematisch angedeutet ist, kann ferner auch zur elektrischen Anschlußverbindung der leitenden Schicht auf der Bildschirmfilter-Scheibe 7 eine elektrische Anschlußklemme 15 beispielsweise in Form einer U-förmigen Metallklemme bevorzugt in der U-förmigen Nut 9′ der Einhängeinrichtung 9 eingesetzt werden, so daß über einen in der Zeichnung nur schematisch angedeuteten Anschlußdraht 17 die Bildschirmfilter-Scheibe 7 elektrisch angeschlossen, vorzugsweise geerdet ist.

**Patentansprüche**

1. Halte- und Befestigungsvorrichtung zur Fixierung von Bildschirmfiltern (7) an Monitoren (1), nämlich an deren flach oder gewölbt ausgebildeten Frontmasken, insbesondere mittels eines Klettverschlusses (5), **gekennzeichnet durch** ein den scheibenförmigen Bildschirmfilter (7) haltendes Adapterprofil (3), welches zumindest abschnittsweise an den gegenüberliegenden vertikalen und/oder horizontalen Seitenbegrenzungen der Frontmaske des Monitors (1) befestigbar ist, wobei der scheibenförmige Bildschirmfilter (7) auf der von der Frontmaske des Monitors (1) abgewandt liegenden Seite des Adapterprofils (3) sitzt oder anbringbar ist, und daß das Adapterprofil (3) aus einer elastischen oder formanpassungsfähigen Faltenbalgkonstruktion besteht.

2. Halte- und Befestigungsvorrichtung nach Anspruch 1, **dadurch gekennzeichnet**, daß das faltenbalgähnliche Adapterprofil (3) jeweils einen Mehrfach-Faltenmechanismus aufweist.

3. Halte- und Befestigungsvorrichtung nach Anspruch 1 oder 2, **dadurch gekennzeichnet,** daß das anpaßfähige Adapterprofil (3) aus Kunststoff besteht.

4. Halte- und Befestigungsvorrichtung nach Anspruch 1 oder 2, **dadurch gekennzeichnet**, daß das anpaßfähige Adapterprofil (3) aus Metall besteht.

5. Halte- und Befestigungsvorrichtung nach Anspruch 3 oder 4, **dadurch gekennzeichnet**, daß das anpaßfähige Adapterprofil (3) im Extrudierverfahren hergestellt ist.

6. Halte- und Befestigungsvorrichtung nach einem der Ansprüche 1 bis 5, **dadurch gekennzeichnet**, daß die endgültige Halte- und Fixierlage des scheibenförmigen Bildschirmfilters (7) über ein seitlich, oben und/oder unten an der zugehörigen Seitenbegrenzung anbringbares Fixierstück (13) begrenzt ist.

7. Halte- und Befestigungsvorrichtung nach Anspruch 6, **dadurch gekennzeichnet**, daß das Fixierstück (13) aus einem auf das elastisch verformbare Adapterprofil (3) aufsteckbaren Ring oder aus einer aufsteckbaren Klammer, vorzugsweise aus Kunststoff oder Metall, besteht.

8. Halte- und Befestigungsvorrichtung nach Anspruch 6, **dadurch gekennzeichnet**, daß das Fixierstück (13) mittels einer Durchbohrung oder Durchstanzung und eines die endgültige Halte- und Fixierlage des anpaßbaren Adapterprofils (3) begrenzenden Stiftes gebildet ist.

9. Halte- und Befestigungsvorrichtung nach Anspruch 6, **dadurch gekennzeichnet,** daß das Fixierstück (13) in Form einer mittigen Blockierung der faltenbalgartigen Wirkung des Adapterprofils (3) durch Verklebung gebildet ist.

10. Halte- und Befestigungsvorrichtung nach einem der Ansprüche 6 bis 9, **dadurch gekennzeichnet**, daß das Fixierstück jeweils mittig an der seitlichen, der oberen und/oder unteren Seitenbegrenzung anbringbar ist.

11. Halte- und Befestigungsvorrichtung nach einem der Ansprüche 1 bis 10, **dadurch gekennzeichnet**, daß eine Einhängvorrichtung (9) aus einer am Adapterprofil (3) zumindest abschnittweise ausgebildeten Nut (9′) vorgesehen ist.

12. Halte- und Befestigungsvorrichtung nach einem der Ansprüche 1 bis 10, **dadurch gekennzeichnet**, daß der scheibenförmige Bildschirmfilter (7) gegenüberliegend zum Monitor am Adapterprofil (3) angeklebt ist.

13. Halte- und Befestigungsvorrichtung nach einem der Ansprüche 1 bis 10, **dadurch gekennzeichnet**, daß der scheibenförmige Bildschirmfilter (7) über einen Klettverschluß (11) an dem Adapterprofil (3) gegenüberliegend zum Monitor (1) lösbar befestigbar ist.

14. Halte- und Befestigungsvorrichtung nach einem der Ansprüche 1 bis 13, **dadurch gekennzeichnet**, daß ferner noch am Adapterprofil veranker- bzw. einbringbar eine Anschlußklemme (15) vorgesehen ist, über welche die elektrisch leitfähige Schicht des scheibenförmigen Bildschirmfilters (7) erdbar ist.

## Claims

1. Securing and fastening means for fixing screen filters (7) to monitors (1), ie to the flat or curved front masks thereof, in particular by means of a velcro fastener (5), characterised by an adapter profile (3) retaining the disk-shaped screen filter (7) and being attachable at least in sections to the reverse vertical and/or horizontal borders of the front mask of the monitor (1), the disk-shaped screen filter (7) being arranged or attachable on that side of the adapter profile (3) which faces away from the front mask of the monitor (1), and in that the adapter profile (3) is of an elastic or flexible construction.

2. Securing and fastening means as claimed in Claim 1, characterised in that the bellow-like adapter profile (3) has a multi-bellow mechanism each.

3. Securing and fastening means as claimed in Claim 1 or 2, characterised in that the adaptable adapter profile (3) is made of plastics.

4. Securing and fastening means as claimed in Claim 1 or 2, characterised in that the adaptable adapter profile (3) is made of metal.

5. Securing and fastening means as claimed in Claim 3 or 4, characterised in that the adaptable adapter profile (3) is made by extrusion.

6. Securing and fastening means as claimed in any one of Claims 1 to 5, characterised in that the final securing and fixing position of the disk-shaped screenfilter (7) is defined by a fixing piece (13) attachable to the associated border laterally, at the top and/or at the bottom.

7. Securing and fastening means as claimed in Claim 6, characterised in that the fixing piece (13) consists of a ring to be slipped over the flexible adapter profile (3) or of a clip to be slipped over, preferably of plastics or metal.

8. Securing and fastening means as claimed in Claim 6, characterised in that the fixing piece (13) is formed by means of a through-bore or through-punching and of a pin defining the final securing and fixing position of the adaptable adapter profile (3).

9. Securing and fastening means as claimed in Claim 6, characterised in that the fixing piece (13) is made in the form of a central stop for blocking the bellow effect of the adapter profile (3) by bonding.

10. Securing and fastening means as claimed in any one of Claims 6 to 9, characterised in that the fixing piece can be attached centrally to the lateral, the top and/or the bottom border, respectively.

11. Securing and fastening means as claimed in any one of Claims 1 to 10, characterised in that hooking means (9) consisting of a groove (9') formed on the adapter profile (3) at least in sections are provided.

12. Securing and fastening means as claimed in any one of Claims 1 to 10, characterised in that the disk-shaped screen filter (7) is bonded to the adapter profile (3) opposite the monitor.

13. Securing and fastening means as claimed in any one of Claims 1 to 10, characterised in that the disk-shaped screen filter (7) can be detachably attached to the adapter profile (3) opposite the monitor (1) via a velcro fastener.

14. Securing and fastening means as claimed in any one of Claims 1 to 13, characterised in that additionally a connection terminal (15) is provided, which can be secured to or inserted into the adapter profile and through which the electrically conductive layer of the disk-shaped screed filter (7) can be earthed.

## Revendications

1. Dispositif de retenue et de fixation pour fixer des filtres d'écran (7) sur des moniteurs (1), c'est-à-dire sur leurs masques avant de forme plate ou cintrée, en particulier au moyen d'une fermeture à accrochage (5), caractérisé par un profil d'adapteur (3) maintenant le filtre d'écran (7) en forme de disque, qui peut être fixé au moins partiellement aux limites latérales verticales et horizontales opposées du masque avant du moniteur (1), tandis que le filtre d'écran (7) en forme de disque repose ou peut être placé sur le côté du profil d'adapteur (3) opposé au masque avant du moniteur (1), et en ce que le profil d'adapteur (3) est constitué d'une construction à soufflet élastique ou adaptable à la forme.

2. Dispositif de retenue et de fixation selon la revendication 1, caractérisé en ce que le profil d'adapteur (3) à soufflet présente un mécanisme de pliage multiple.

3. Dispositif de retenue et de fixation selon la revendication 1 ou 2, caractérisé en ce que le profil d'adapteur adaptable (3) est réalisé en matière plastique.

4. Dispositif de retenue et de fixation selon la revendication 1 ou 2, caractérisé en ce que le profil d'adapteur adaptable (3) est réalisé en métal.

5. Dispositif de retenue et de fixation selon la revendication 3 ou 4, caractérisé en ce que le profil d'adapteur adaptable (3) est fabriqué par un procédé d'extrusion.

6. Dispositif de retenue et de fixation selon l'une des revendications 1 à 5, caractérisé en ce que la position finale de retenue et de fixation du filtre d'écran (7) en forme de disque est limitée par une pièce de fixation (13) pouvant être placée latéralement au-dessus et/ou en dessous de la limite latérale correspondante.

7. Dispositif de retenue et de fixation selon la revendication 6, caractérisé en ce que la pièce de fixation (13) est constituée d'une bague pouvant être placée sur le profil d'adapteur (3) élastiquement déformable ou d'une pince, de préférence en matière plastique ou en métal, qui peut être montée.

8. Dispositif de retenue et de fixation selon la revendication 6, caractérisé en ce que la pièce de fixation (13) est constituée par un trou percé ou estampé et une broche délimitant la position finale de retenue et de fixation du profil d'adapteur adaptable (3).

9. Dispositif de retenue et de fixation selon la revendication 6, caractérisé en ce que la pièce de fixation (13) est formée par collage sous forme d'un blocage central de l'effet de soufflet du profil d'adapteur (3).

10. Dispositif de retenue et de fixation selon l'une des revendications 6 à 9, caractérisé en ce que la pièce de fixation peut être placée au milieu de la limitation latérale supérieure et/ou inférieure.

11. Dispositif de retenue et de fixation selon l'une des revendications 1 à 10, caractérisé en ce qu'un dispositif de suspension (9) est prévu sous forme d'une rainure (9') disposée au moins partiellement sur le profil d'adapteur (3).

12. Dispositif de retenue et de fixation selon l'une des revendications 1 à 10, caractérisé en ce que le filtre d'écran (7) en forme de disque est fixé par collage vis-à-vis du moniteur sur le profil d'adapteur (3).

13. Dispositif de retenue et de fixation selon l'une des revendications 1 à 10, caractérisé en ce que le filtre d'écran (7) en forme de disque peut être fixé de manière amovible sur le profil d'adapteur (3) par une fermeture à arrachement (11) vis-à-vis du moniteur (1).

14. Dispositif de retenue et de fixation selon l'une des revendications 1 à 13, caractérisé en ce qu'il est prévu en outre, sur le profil d'adapteur, une pince de raccordement (15) pouvant être ancrée ou montée et par laquelle la couche électriquement conductrice du filtre d'écran (7) en forme de disque peut être mise à la terre.

Fig. 1

Fig. 2a

Fig. 3a

Fig. 4a

Fig. 2b

Fig. 3b

Fig. 4b